# EUROPÄISCHE PATENTSCHRIFT

(11) **EP 2 245 034 B1**
(45) Veröffentlichungstag und Bekanntmachung des Hinweises auf die Patenterteilung: **04.01.2012**
(21) Anmeldenummer: 09713408.4
(22) Anmeldetag: 30.01.2009
(51) Int. Cl.: C07F 7/00

(54) **HÄRTBARE POLYMERABMISCHUNGEN**
CURABLE POLYMER MIXTURES
MÉLANGES POLYMÈRES DURCISSABLES

(30) Priorität: 20.02.2008 DE 102008000353
(43) Veröffentlichungstag der Anmeldung: 03.11.2010
(73) Patentinhaber: Wacker Chemie AG, 81737 München (DE)
(72) Erfinder: BRIEHN, Christoph, 84367 Zeilarn (DE); BORTENSCHLAGER, Martin, 85232 Bergkirchen (DE)
(74) Vertreter: Fritz, Helmut
(86) Internationale Anmeldenummer: PCT/EP2009/051039
(87) Internationale Veröffentlichungsnummer: WO 2009/103604

(56) Entgegenhaltungen:
- EP-A- 1 138 738
- WO-A-2004/058858
- WO-A-2005/035630
- WO-A-2006/049368
- DE-A1- 19 860 361
- DATABASE WPI Week 200527 Thomson Scientific, London, GB; AN 2005-256261 XP002524291 & JP 2005 068191 A (JAPAN SCI & TECHNOLOGY AGENCY) 17. März 2005 (2005-03-17)
- DATABASE WPI Week 200444 Thomson Scientific, London, GB; AN 2004-462780 XP002524292 & JP 2004 115705 A (DAINIPPON INK & CHEM INC) 15. April 2004 (2004-04-15)

## Beschreibung

Die Erfindung betrifft thermisch härtbare Polymerabmischungen, ein Verfahren zur Härtung von Polymerabmischungen, Vernetzungsprodukte, hergestellt durch Erwärmen der Polymerabmischungen und ein Verfahren zur Herstellung von Beschichtungen, silanvernetzten Formkörpern und zu Kleb- und Dichtstoffen aus den Polymerabmischungen.

Siloxane und organische Polymere, die hydrolysierbare Silylgruppen tragen und durch Kondensation der bei Zutritt von (Luft-)Feuchtigkeit gebildeten Silanolgruppen gehärtet werden, sind Stand der Technik. Nachteilig an diesen Polymeren ist die Tatsache, dass die Aushärtungsgeschwindigkeit durch die Diffusion des Wassers zu den hydrolysierbaren Silylgruppen im zu härtenden Polymer bestimmt wird. Insbesondere die Aushärtung dicker Schichten stellt häufig einen sehr langsamen Prozess dar, der einen Einsatz dieser Polymere für eine Vielzahl von Anwendungen erschwert oder sogar unmöglich macht. Gesucht sind daher Siloxane und organische Polymere, die auch in dicker Schicht, bevorzugt in Abwesenheit von (Luft-)Feuchtigkeit, schnell gehärtet werden können.

Die schnelle Härtung dicker Polymerschichten in Abwesenheit von (Luft-)Feuchtigkeit gelingt beispielsweise durch die Methode der Hydrosilylierung, bei der SiH-funktionelle Siloxane mit Vinyl-funktionellen Siloxanen oder organischen Polymeren in Gegenwart eines Edelmetallkatalysators zur Reaktion gebracht werden. Nachteilig an den durch eine Hydrosilylierung härtbaren Polymeren ist, dass es sich bei den zur Härtung benötigten Edelmetallkatalysatoren um sehr hochpreisige Rohstoffe handelt. Die hohen Kosten der Edelmetallkatalysatoren sind insbesondere problematisch, da die Katalysatoren in der Regel im Produkt verbleiben und nicht zurück gewonnen werden können.

Vorteilhaft wäre daher ein Edelmetall-freier Vernetzungsmechanismus, der auch in Abwesenheit von (Luft-)Feuchtigkeit abläuft.

In der US 7 135 418 B1 wird die Abscheidung von SiO₂-Schichten auf Halbleitersubstraten durch *Atomic Layer Deposition* (ALD) bzw. *Rapid Vapor Deposition* (RVD) von Alkoxysilanolen beschrieben. In einem ersten Prozessschritt wird dabei ein Halbleitersubstrat mit einem Metall-Prekursor (z.B. Trimethylaluminium) belegt. Anschließend wird die belegte Oberfläche zur Abscheidung von SiO₂ für kurze Zeit wiederholt einer Atmosphäre eines Siliciumdioxid-freisetzenden Prekursors, der tert.-Pentoxysilyl-Gruppen trägt, ausgesetzt. Das Siliciumdioxid bildet sich dabei bei erhöhter Temperatur beispielsweise aus Tris(tert.-pentoxy)silanol unter Abspaltung von u.a. Wasser und Alkenen.

Don Tilley et al. lehren in Adv. Mater. 2001, 13, 331-335 die Herstellung von Mischoxiden durch die Thermolyse von molekularen Vorstufen, die Tris(tert.-butoxy)silyl-Gruppen tragen. Die Bildung der Mischoxide erfolgt bei Temperaturen zwischen 90 °C und 150 °C ohne Zutritt von (Luft-)Feuchtigkeit unter Abspaltung von Isobutylen und Wasser.

Die Nutzung der thermischen Zersetzung von Alkoxysilanolen bzw. Alkoxysilylgruppen zur Herstellung vernetzter Siloxane und organischer Polymere wird in der Literatur nicht beschrieben.

In der WO 2005/035630 A1 werden tert.-Butoxy-funktionelle Siliconharze beschrieben.

In Y. Abe et al. (Bull. Chem. Soc. Japan 1969, 42, 1118-1123) werden tert.-Butoxysil(ox)ane sowie deren Kondensationsprodukte beschrieben, die sich durch unkatalysierte thermische Behandlung in hochmolekulare Verbindungen umwandeln.

J. Beckmann et al. beschreiben in Appl. Organomet. Chem. 2003, 17, 52-62 die Synthese und unkatalysierte thermische Kondensation von tert.-Butoxysilanolen.

M. Sakata et al. lehren in J. Photopolym. Sci. Techn. 1992, 5, 181-190 die Herstellung tert.-Butoxy-funktioneller Siloxane durch Kondensation von Di(acetoxy)-di(tert.-butoxy)silan. Die Polymere werden in Gegenwart von Photosäuren durch Elektronenbestrahlung zu SiO₂ gehärtet.

In WO 2006/049368 A, JP 2005068191 A, JP 2004 115705 A, EP-A-1138738 und DE 19860361 A1 sind über Alkoxygruppen vernetzende Systeme beschrieben, die Wasser zur Kondensationsvernetzung benötigen.

WO 2004/058858 A beschreibt mit einem Platinkatalysator vernetzbare Siliconsysteme.

Gegenstand der Erfindung ist ein Verfahren zur Herstellung von Beschichtungen, silanvernetzten Formkörpern und zu Kleb- und Dichtstoffen aus vernetzbaren Polymerabmischungen (**A**), enthaltend mindestens eine Verbindung (**V**), welche mindestens eine Alkoxysilylgruppe der allgemeinen Formel [1],

=Si-O-C(R¹) (R²) (R³) [1],

trägt,
wobei die Verbindungen (**V**) Polymere (**P**), nämlich lineare oder verzweigte Organopolysiloxane der allgemeinen Formel [11],

(R⁷₃SiO_{1/2})ₐ(R⁷₂SiO_{2/2})_{b}(R⁷SiO_{3/2})_{c}(SiO_{4/2})_{d} [11],

sind, oder niedermolekulare Verbindungen (**N**) sind, die mindestens eine Gruppe der allgemeinen Formel [1] tragen, sowie einen Katalysator (**K**), der ausgewählt wird aus einer Brönstedt-Säure, Brönstedt-Base, Lewis-Säure und LewisBase, und der ausgewählt wird aus Zinn, Zinnoxid sowie Zinnverbindungen, Titan, Titan(IV)isopropanolat, Kupfer, Kupferoxid sowie Kupferverbindungen, Eisen, Eisen(III)chlorid, Eisen(III)acetylacetonat, Mangan, Manganoxid sowie Manganverbindungen, Aluminium, Aluminium(III)chlorid, Aluminium(III)isopropanolat, Trimethylaluminium, Bor, Boroxid sowie Borverbindungen, Zirkonium, Zr(IV)acetylacetonat, Gallium, Galliumoxid sowie Galliumverbindungen, Cer, Ceroxid sowie Cerverbindungen, Zink, Zinklaurinat, Zinkpivalat, Carbonsäuren, Mineralsäuren und Verbindungen, die bei Bestrahlung mit energiereicher Strahlung, unter Zersetzung Protonen freisetzen,
wobei
**R¹**, **R²**, **R³** Wasserstoff, ein Halogen, einen über ein Kohlenstoffatom gebundenen Rest, wobei die Reste **R¹**, **R²**, **R³** miteinander verbunden sein können, oder einen zweiwertigen über ein Kohlenstoffatom gebundenen Rest, der zwei Alkoxysilylgruppen der allgemeinen Formel [1] verbindet, mit der Maßgabe, dass höchstens 2 der Reste **R¹**, **R², R³** Wasserstoff bedeuten und Alkoxysilylreste der Formel =Si-O-CH₂-R⁴ ausgenommen sind und
**R⁴** einen unverzweigten aliphatischen Kohlenwasserstoffrest mit 1-12 Kohlenstoffatomen bedeuten,
**R⁵** Wasserstoff, ein Halogen, einen unsubstituierten oder substituierten aliphatischen oder aromatischen Kohlenwasserstoffrest mit 1-12 Kohlenstoffatomen, eine OH-Gruppe, eine -OR⁶-Gruppe, -OC(O)R⁶-Gruppe oder einen Metalloxyrest M-O-,
**R⁶** Wasserstoff, einen unsubstituierten oder substituierten aliphatischen oder aromatischen Kohlenwasserstoffrest mit 1-12 Kohlenstoffatomen und
**M** ein Metallatom, dessen gegebenenfalls vorliegende freie Valenzen durch Liganden abgesättigt sind,
**R⁷** die Bedeutung des Restes **R⁵** und mindestens ein Rest **R⁷** die Bedeutung -O-C(R¹)(R²)(R³) annimmt,
**a**, **b**, **c** und d einen ganzzahligen Wert von größer oder gleich 0 bedeuten, mit der Maßgabe, dass die Summe aus **a** + **b** + **c** mindestens 1 ist und
wobei Polymerabmischungen (**A**) ausgeschlossen sind, die bei der Vernetzung SiO₂ bilden,
mit der Massgabe, dass, wenn die Verbindungen (**V**) niedermolekulare Verbindungen (**N**) sind, die Polymerabmischungen (**A**) organische Polymere enthalten, welche durch Reaktion mit Wasser SiOH-Gruppen ausbilden oder eine Kondensationsreaktion mit SiOH-tragenden Molekülen eingehen können,
bei dem die vernetzbaren Polymerabmischungen (**A**) zur Härtung für 1 s bis 48 h auf 5 °C bis 300 °C erwärmt werden.

In einer bevorzugten Ausführungsform der Erfindung nimmt die Alkoxysilylgruppe der allgemeinen Formel [1] die allgemeine Formel [2] an,

=Si(R⁵)-O-C(R¹)(R²)(R³) [2],

wobei
**R⁵** Wasserstoff, ein Halogen, einen unsubstituierten oder substituierten aliphatischen oder aromatischen Kohlenwasserstoffrest mit 1-12 Kohlenstoffatomen, eine OH-Gruppe, eine -OR⁶-Gruppe, -OC(O)R⁶-Gruppe oder einen Metalloxyrest M-O-,
**R⁶** Wasserstoff, einen unsubstituierten oder substituierten aliphatischen oder aromatischen Kohlenwasserstoffrest mit 1-12 Kohlenstoffatomen und
**M** ein Metallatom, dessen gegebenenfalls vorliegende freie Valenzen durch Liganden abgesättigt sind, bedeuten.

Die Polymerabmischungen (**A**) können auch in dicker Schicht ohne Zutritt von (Luft-)Feuchtigkeit und in Abwesenheit hochpreisiger Edelmetallkatalysatoren durch Erwärmen gehärtet werden. Insbesondere sind dazu keine hohen Temperaturen erforderlich.

In der allgemeinen Formel [1] können die Siliciumatome an den mit =Si bezeichneten Valenzen mit beliebigen Resten abgesättigt sein.

Die Reste **R¹, R²**, **R³** bedeuten insbesondere Wasserstoff, Chlor, einen unsubstituierten oder substituierten aliphatischen oder aromatischen Kohlenwasserstoffrest oder einen über ein Kohlenstoffatom gebundenen Siloxanrest, eine Carbonylgruppe - C(O)R⁶, eine Carbonsäureestergruppe -C(O)OR⁶, eine Cyanogruppe -C≡N oder eine Amidgruppe -C(O)NR⁶₂, wobei **R⁶** die oben angegebene Bedeutung annimmt. Die Reste **R¹, R², R³** weisen vorzugsweise 1 bis 12, insbesondere 1 bis 6 Kohlenstoffatome auf. Ebenso bevorzugt sind hochmolekulare Reste, die (polymere) Wiederholungseinheiten aufweisen. Besonders bevorzugt stellen die Reste **R¹, R², R³** Methyl-, Ethyl-, Propyl-, Vinyl-, Phenyl- oder Carboxylreste -C (O) OCH₃ dar.

Zwei oder drei der Reste **R¹**, **R² R³** können miteinander verbunden sein, beispielsweise können **R²** und **R³** aus einem Diol gebildet worden sein.

Bei den Resten **R⁵** handelt es sich bevorzugt um Wasserstoff, Chlor, Methyl, Ethyl, Propyl, Phenyl, Methoxy, Ethoxy, Acetoxy, Vinyl, OH, einen Metalloxyrest -O-M oder einen Rest -CH₂-W, wobei **W** ein Heteroatom, wie beispielsweise N, O, P, S, darstellt und die freien Valenzen am Heteroatom durch Alkyl- bzw. Arylreste mit vorzugsweise 1 bis 10 Kohlenstoffatomen abgesättigt sind.

Der Rest **R⁶** bedeutet bevorzugt Wasserstoff, Methyl, Ethyl, Propyl, Vinyl oder Phenyl.

Die Reste **M** bedeuten vorzugsweise Metallatome, die ausgewählt werden aus Lithium, Natrium, Kalium, Calcium, Magnesium, Bor, Aluminium, Zirkonium, Gallium, Eisen, Kupfer, Titan, Zink, Bismuth, Cer und Zinn. Im Falle mehrwertiger Metalle sind die freien Valenzen am Metall durch Halogenide, vorzugsweise Chlorid und Bromid, Alkoxidgruppen, vorzugsweise Methoxy-, Ethoxy- oder Isopropoxyreste, Alkylreste, vorzugsweise Methyl-, Ethyl- und Phenylgruppen, Carbonsäurereste, vorzugsweise Carbonsäurereste mit 2-16 Kohlenstoffatomen oder gängige ein- und mehrzähnige Komplexliganden, die typischerweise in der metallorganischen Synthese zum Einsatz kommen (z.B. Acetylaceton), abgesättigt.

Bevorzugt tragen die Reste =Si-O-C(R¹)(R²)(R³) in β-Position zum Sauerstoff einen Wasserstoff. Beispiele für bevorzugte Alkoxysilylgruppen der allgemeinen Formel [1] sind Gruppen der Formeln [3]-[9],

≡Si-O-C(CH₃)₃ [3],

≡Si-O-C(CH₃)₂C₂H₅, [4]

≡Si-O-C(CH₃)₂C₆H₅ [5],

≡Si-O-C(CH₃)₂C(O)CH₃ [6],

≡Si-O-C(CH₃)[C(O)OC₂H₅]₂ [7],

≡Si-O-CH(CH₃)C₆H₅ [8],

≡Si-O-CH(CH₃)C(O)OCH₃ [9].

Bei den Verbindungen (**V**) kann es sich um hochmolekulare bzw. polymere Verbindungen (**P**) oder niedermolekulare Verbindungen (**N**) handeln.

Die Reste **R⁷** bedeuten bevorzugt eine Methyl-, Ethyl-, Propyl-, Butyl-, Octyl-, Phenyl-, OH-Gruppe, Methoxy, Ethoxy, Propoxy, Butoxy, Acetoxy oder eine Gruppe -O-C(R¹)(R²)(R³).

Besonders bevorzugt handelt es sich bei den Polymeren (**P**) um lineare Siloxane, die in terminaler oder lateraler Position Alkoxysilylgruppen der allgemeinen Formel [1] tragen.

Zur Herstellung der Alkoxysilyl-funktionellen Polymere (**P**) können gängige, dem Fachmann geläufige Syntheseverfahren zum Einsatz kommen.

Alkoxysilyl-funktionelle Polymere (**P**) können beispielsweise durch Reaktion eines α,ω-SiOH-funktionellen Siloxans oder SiOH-funktionellen Siliconharzes mit Silanen der allgemeinen Formel [12],

R⁵₄₋ₙSi(O-C(R¹)(R²)(R³))ₙ [12],

oder deren Hydrolyse- und Kondensationsprodukten,
wobei
n die Werte 1, 2 oder 3 und
**R¹, R², R³** und **R⁵** die oben genannten Bedeutungen aufweisen,
oder Kondensation der Silane der allgemeinen Formel [12] oder Cokondensation der Silane der allgemeinen Formel [12] mit den Silanen der allgemeinen Formel [13],

YₑSiR⁸₄₋ₑ [13],

oder deren Hydrolyse- und Kondensationsprodukten,
wobei
**Y** Wasserstoff, eine OH-Gruppe, Halogen, eine Alkoxygruppe mit 1-12 Kohlenstoffatomen, einen Carboxylrest mit 1-12 Kohlenstoffatomen,
**R⁸** einen gegebenenfalls Heteroatom-substituierten aliphatischen oder aromatischen Kohlenwasserstoffrest mit 1-12 Kohlenstoffatomen bedeuten und
**e** die Werte 1, 2, 3 und 4 annehmen kann,
oder das dem Fachmann bekannte Verfahren der Äquilibrierung eines Organopolysiloxans der allgemeinen Formel [11] mit einem oder mehreren Silanen der allgemeinen Formel [12] oder deren Hydrolyse- oder Kondensationsprodukten erhalten werden.

In einer weiteren Ausführungsform der Erfindung handelt es sich bei den Verbindungen (**V**) um niedermolekulare Verbindungen (**N**), die mindestens eine Gruppe der allgemeinen Formel [1] tragen. Typischerweise liegen die niedermolekularen Verbindungen (**N**) in Form von Silanen der vorstehenden allgemeinen Formel [12] vor. Bevorzugt kommen als Verbindungen (**N**) die Substanzen der Formeln [14]-[25],

XSi(O-C(CH₃)₃)₃ [14],

X₂Si(O-C(CH₃)₃)₂ [15],

X₃Si(O-C(CH₃)₃) [16],

XSi(O-C(CH₃)₂C₂H₅)₃ [17],

X₂Si(O-C(CH₃)₂C₂H₅)₂ [18],

X₃Si(O-C(CH₃)₂C₂H₅) [19],

XSi(O-CH(CH₃)(C₆H₅))₃ [20] ,

X₂Si(O-CH(CH₃)(C₆H₅))₂ [21],

X₃Si(O-CH(CH₃)(C₆H₅)) [22],

XSi(O-CH(CH₃)C(O)OCH₃)₃ [23],

X₂Si(O-CH(CH₃)C(O)OCH₃)₂ [24],

X₃Si(O-CH(CH₃)C(O)OCH₃) [25],

und deren Hydrolyse- und Kondensationsprodukte zum Einsatz,
wobei
**X** Cl, OH, Methyl, Ethyl, Vinyl, Phenyl, einen Carboxylrest mit 1-6 Kohlenstoffatomen, einen Alkoxyrest mit 1-6 Kohlenstoffatomen oder einen Metalloxyrest M-O- bedeuten und
**M** die oben genannten Bedeutungen annimmt.

Die Verbindungen (**V**) enthalten im Mittel 1 bis 10000 Alkoxysilylgruppen der allgemeinen Formel [1] pro Molekül. Handelt es sich bei der Verbindung (**V**) um eine niedermolekulare Verbindung (**N**), so ist die Anzahl der Alkoxysilylgruppen der allgemeinen Formel [1] bevorzugt gleich 1. Die Anzahl der Reste -O-C(R¹)(R²)(R³) pro Alkoxysilylgruppe beträgt 1, 2, 3 oder 4. Besonders bevorzugt beträgt die Anzahl 2 oder 3. Handelt es sich bei den Verbindungen (**V**) um Polymere (**P**), so liegt die Anzahl der Alkoxysilylgruppen der allgemeinen Formel [1] bevorzugt bei 1 bis 10000. Besonders bevorzugt liegt die Anzahl der Alkoxysilylgruppen der allgemeinen Formel [1] bei 5 bis 1000. Dabei beträgt die Anzahl der Reste -O-C(R¹)(R²)(R³) pro Alkoxysilylgruppe 1, 2 oder 3. Besonders bevorzugt beträgt die Anzahl 2 oder 3.

Des Weiteren können die Polymerabmischungen (**A**) organische Polymere und Siloxane enthalten. Bevorzugt sind Polymere und Siloxane, die Gruppen tragen, welche durch Reaktion mit Wasser SiOH-Gruppen ausbilden oder eine Kondensationsreaktion mit SiOH-tragenden Molekülen eingehen können. Beispiele für derartige organische Polymere und Siloxane sind SiOHfunktionelle Siliconöle und Siliconharze sowie Siloxane und organische Polymere, die hydrolysierbare Si-OAlkyl-Gruppen, wie sie beispielsweise in der DE 10 2006 022 095 A1 beschrieben sind, tragen.

Bevorzugte Katalysatoren (**K**) sind Lewis-Säuren und Brönstedt-Säuren. Beispiele für geeignete Lewis-Säuren sind Zinn, Zinnoxid sowie Zinnverbindungen, wie z.B. Dibutylzinndilaurat (DBTL), Titan, Titanoxid sowie Titanverbindungen, wie z.B. Titan(IV)isopropanolat, Kupfer, Kupferoxid sowie Kupferverbindungen, wie z.B. Kupfer(I)trifluormethansulfonat, Eisen, Eisenoxid sowie Eisenverbindungen, wie z.B. Eisen(III)chlorid, Eisen(III)acetylacetonat, Mangan, Manganoxid sowie Manganverbindungen, wie z.B. Mangan(II)acetylacetonat, Aluminium, Aluminiumoxid sowie Aluminiumverbindungen, wie z.B. Aluminium(III)chlorid, Aluminium(III)isopropanolat, Trimethylaluminium, Bor, Boroxid sowie Borverbindungen, wie z.B. Bortrichlorid, Zirkonium, Zirkoniumoxid sowie Zirkoniumverbindungen, wie z.B. Zr(IV)acetylacetonat, Gallium, Galliumoxid sowie Galliumverindungen, z.B. Gallium(III)acetylacetonat, Cer, Ceroxid sowie Cerverbindungen, wie z.B. Cer(III)chlorid und Zink, Zinkoxid sowie Zinkverbindungen, wie z.B. Zinklaurinat bzw. Zinkpivalat. Beispiele für geeignete Brönstedt-Säuren sind Carbonsäuren, wie beispielsweise Laurinsäure, Sulfonsäuren, wie beispielsweise Trifluormethansulfonsäure, p-Toluosulfonsäure und Dodecylbenzolsulfonsäure, Mineralsäuren, wie beispielsweise Salzsäure, Salpetersäure und Phosphorsäure. Zudem eignen sich auch Verbindungen, die bei Bestrahlung mit energiereicher Strahlung, wie beispielsweise UV-Licht oder Elektronenstrahlung, unter Zersetzung Protonen freisetzen. Beispielhaft seien für derartige Verbindungen Diaryliodoniumverbindungen, wie beispielsweise {4-[(2-Hydroxytetradecyl)-oxy]-phenyl}phenyliodonium-hexafluoroantimonat, Diphenyliodoniumnitrat, Bis(4-tert.-butylphenyl)iodonium-p-toluolsulfonat, Bis(4-tert.-butylphenyl)iodonium-trifluormethansulfonat, Triarylsulfoniumverbindungen, wie beispielsweise 4-(Thiophenoxyphenyl)-diphenylsulfonium-hexafluoroantimonat, (4-Bromphenyl)diphenylsulfoniumtrifluormethansulfonat und N-Hydroxynaphthalimidetrifluormethansulfonat sowie 2-(4-Methoxystyryl)-4,6-bis(trichlormethyl)-1,3,5-triazin genannt.

Insbesondere kommen Katalysatoren (**K**) zum Einsatz, die eine Kondensation zwischen zwei Silanolgruppen, zwischen einer Silanolgruppe und einer Alkoxysilylgruppe, zwischen einer Silanolgruppe und einer Si-Cl-Gruppe bzw. zwischen einer Alkoxysilylgruppe oder Si-Cl-Gruppe und Wasser beschleunigen. Zudem können Mischungen verschiedener Katalysatoren (**K**) zum Einsatz kommen. Der Katalysator (**K**) wird bevorzugt in einer Konzentration von mindestens 10 ppm, besonders bevorzugt mindestens 0,1 Gew.-%, jeweils bezogen auf die Polymerabmischung (**A**), eingesetzt. Der Katalysator (**K**) wird bevorzugt in einer Konzentration von höchstens 20 Gew.-%, besonders bevorzugt höchstens 10 Gew.-%, insbesondere höchstens 2 Gew.-%, jeweils bezogen auf die Polymerabmischung (**A**) eingesetzt.

Die Polymerabmischungen (**A**) können lösungsmittelfrei oder auch lösungsmittelhaltig sein. Beispiele für geeignete organische Lösungsmittel sind Benzine, n-Heptan, Benzol, Toluol, Xylole, halogenierte Alkane mit 1 bis 6 Kohlenstoffatomen, Ether, Ester wie beispielsweise Ethylacetat, Ketone wie beispielsweise Methylethylketon, Amide wie beispielsweise Dimethylacetamid und Dimethylsulfoxid. In einer bevorzugten Ausführungsform der Erfindung sind die Polymerabmischungen (**A**) lösungsmittelfrei. In einer weiteren bevorzugten Ausführung der Erfindung liegen die Polymerabmischungen (**A**) in Form wässriger Emulsionen oder Dispersionen vor.

Des Weiteren können die Polymerabmischungen (**A**) Additive (**W**), z.B. Verlaufshilfsmittel, Wasserfänger, Fungizide, Flammschutzmittel, Dispergierhilfsmittel, Farbstoffe, Weichmacher, Hitzestabilisatoren, Mittel zur Einstellung der Trennkraft, Anti-Misting-Additive wie sie beispielsweise in der WO 2006/133769 beschrieben sind, Duftstoffe, oberflächenaktive Substanzen, Haftvermittler, Fasern, wie beispielsweise Glasfasern, Kunststofffasern, Lichtschutzmittel wie UV-Absorber und Radikalfänger und partikuläre Füllstoffe, wie beispielsweise Russ, Pigmente wie z.B. Eisenoxidschwarz, Quarz, Talk, pyrogene Kieselsäure, Kreiden oder Aluminiumoxid, enthalten. Besonders bevorzugt kommen als Additive (**W**) gefällte und pyrogene Kieselsäuren, sowie Gemische derselben, zum Einsatz. Die spezifische Oberfläche dieser Füllstoffe sollte mindestens 50 m²/g betragen oder vorzugsweise im Bereich von 100 bis 400 m²/g gemäß der Bestimmung nach der BET-Methode liegen. Die genannten Kieselsäurefüllstoffe können hydrophilen Charakter haben oder nach bekannten Verfahren hydrophobiert sein. Der Gehalt an Additiven (**W**) in den Polymerabmischungen (**A**) liegt typischerweise im Bereich von 0 bis 70 Gew.-%, vorzugsweise bei 0 bis 50 Gew.-%.

Zudem können die Polymerabmischungen (**A**) Verbindungen (**I**) enthalten, die unter thermischem Einfluss oder durch Bestrahlung mit UV-Licht freie Radikale bilden. Beispiele für diese Verbindungen (**I**) sind dem Fachmann bekannte thermische und photochemische Polymerisationsinitiatoren, wie sie beispielsweise im "Handbook of Free Radical Initiators" von E. T. Denisov, T. G. Denisova und T. S. Pokidova, Wiley-Verlag, 2003, beschrieben sind.

Beispiele für thermische Initiatoren (**I**) sind tert.-Butylperoxid, tert.-Butyl-peroxopivalat, tert.-Butyl-peroxo-2-ethylhexanoat, Dibenzoylperoxid, Dilauroylperoxid, Azobisisobutyronitril, tert.-Butyl-peroxobenzoat, oder Cumylhydroperoxid. Beispiele für Photoinitiatoren (**I**) sind Benzophenon, 2-Hydroxy-2-methyl-1-phenyl-1-propanon, 1-Hydroxycyclohexylphenylketon oder Methylbenzoylformiat.

Zur Herstellung der Polymerabmischungen (**A**) können die einzelnen Komponenten in beliebiger Reihenfolge miteinander vermischt werden. Die Herstellung der Polymerabmischungen (**A**) kann dabei in kontinuierlicher oder diskontinuierlicher Weise erfolgen.

Enthalten die Polymerabmischungen (**A**) als Verbindungen (**V**) Polymere (**P**), deren Polymerreste (**PR**) Organopolysiloxane sind, so wird die Härtung bevorzugt bei einer Temperatur von 5 °C bis 190 °C durchgeführt. Enthalten die Polymerabmischungen (**A**) als Verbindungen (**V**) dagegen niedermolekulare Verbindungen (**N**) oder Polymere (**P**), deren Polymerreste (**PR**) organische Polymerreste darstellen, so erfolgt die Härtung bei 5 °C bis 300 °C. Vorzugsweise werden die Polymerabmischungen (**A**) zur Härtung auf eine Temperatur von mindestens 50 °C, insbesondere mindestens 80 °C gebracht. Vorzugsweise werden die Polymerabmischungen (**A**) zur Härtung auf eine Temperatur von höchstens 180 °C, insbesondere höchstens 150 °C gebracht.

Als Energiequellen für die Vernetzung der Polymerabmischungen (**A**) durch Erwärmen werden vorzugsweise Öfen, z.B. Umlufttrockenschränke, Heizkanäle, beheizte Walzen, beheizte Platten, Infrarot-Wärmestrahler oder Mikrowellen verwendet. Die Polymerabmischungen (**A**) können auch durch Bestrahlen mit Ultraviolettlicht oder Elektronenstrahlung vernetzt werden.

In einer besonders bevorzugten Ausführungsform des Verfahrens erfolgt die Härtung durch thermische Zersetzung der Alkoxysilylgruppe der allgemeinen Formel [1] unter Bildung von Silanolgruppen ≡Si-OH und eine anschließende Kondensation der Silanolgruppen. Bei der thermischen Zersetzung der Alkoxysilylgruppen der allgemeinen Formel [1] können als weitere Spaltprodukte vinyl-funktionelle Verbindungen freigesetzt werden.

In einer besonders bevorzugten Ausführungsform des Verfahrens kommen Polymerabmischungen (**A**) zum Einsatz, die im Zuge der Härtung keine flüchtigen organischen oder anorganischen Verbindungen freisetzen. Derartige Polymerabmischungen liegen beispielsweise vor, wenn die Reste **R¹**, **R²** oder **R³** der Verbindungen (**V**) nichtflüchtige Polymerreste darstellen oder enthalten und auch die übrigen Bestandteile der Abmischung (**A**) unter den Bedingungen der Härtung nichtflüchtig sind. Ebenso gelangt man zu derartigen Polymerabmischungen (**A**), die im Zuge der Härtung keine flüchtigen organischen oder anorganischen Verbindungen freisetzen, indem die bei der Härtung aus den Verbindungen (**V**) gebildeten Spaltprodukte unter den Härtungsbedingungen zu nichtflüchtigen Verbindungen polymerisiert werden. Beispielsweise führt die Härtung einer Polymerabmischung (**A**), die als niedermolekulare Verbindung (**N**) Tris(1-phenylethoxy)vinylsilan enthält, zur Abspaltung von Styrol, das unter den Härtungsbedingungen zu Polystyrol polymerisiert werden kann.

Besonders bevorzugt erfolgt die Härtung der Polymerabmischung (**A**) ohne Zutritt von (Luft-)Feuchtigkeit.

Die Polymerabmischungen (**A**) können als 1-komponentige (1K) oder 2-komponentige (2K) Systeme verarbeitet werden. In Form eines 1K-Systems ist die Polymerabmischung (**A**) lagerfähig. Zur Härtung wird die Abmischung (**A**) ohne Zugabe weiterer Komponenten wie beschrieben erhitzt. Im Falle eines 2K-Systems ist die Polymerabmischung (**A**) nicht lagerfähig bzw. die Topfzeit der Polymerabmischung (**A**) ist stark eingeschränkt. Die Verbindung (**V**) und der Katalysator (**K**) müssen getrennt voneinander gelagert und transportiert werden und dürfen erst kurz vor der Verarbeitung zusammen mit weiteren Komponenten zur Polymerabmischung (**A**) vermischt werden.

Die Polymerabmischungen (**A**) sowie die daraus hergestellten Vernetzungsprodukte können für alle Zwecke eingesetzt werden, für die vernetzte Siloxane, insbesondere elastomere Siloxane, Siliconharze und vernetzte organische Polymere typischerweise eingesetzt werden.

Insbesonders geeignet sind die Polymerabmischungen (**A**) zur Beschichtung von textilen Flächengebilden, wie z.B. Geweben, Vliesen, Gestricken, Gelegen, Wirkwaren, Filzen oder Kettwirkwaren. Die textilen Flächengebilde können dabei gefertigt sein aus Naturfasern, wie Baumwolle, Wolle, Seide etc., oder auch aus Kunstfasern wie Polyester, Polyamid, Aramid etc. Auch aus Mineralfasern, wie z.B. Glas oder Silikaten oder Metallfasern können die Textilien gefertigt sein. Eine bevorzugte Anwendung ist die Nutzung der Polymerabmischungen (**A**) zur Beschichtung von Airbag-Geweben.

Desweiteren können die Polymerabmischungen (**A**) auch zum Beschichten von Oberflächen aus mineralischen Stoffen wie z.B. Steinen, Ziegeln, Platten, Beton, Putzen, Kunststoffen, Naturstoffen oder Metallen verwendet werden.
Insbesondere stellen die Polymerabmischungen (**A**) Beschichtungsmaterialien dar, die für hitzbeständige Überzüge auf Metallen geeignet sind. In Abhängigkeit von ihrer Zusammensetzung können die gehärteten Beschichtungsmaterialien bis zu einer Temperatur von 700 °C eingesetzt werden. Als Anwendungen für derartige Hochtemperaturbeschichtungen seien beispielhaft Auspuff-, Grill-, Motorenteil-, Topf- und Pfannen-, Backblech, Herd- und Waffeleisenlackierungen genannt.
Ebenso können die gehärteten Polymerabmischungen (**A**) die Korrosionsbeständigkeit der beschichteten Materialien verbessern.

Eine weitere Einsatzmöglichkeit der Polymerabmischungen (**A**) ist die Herstellung von gehärteten Polymerbeschichtungen auf Papier, Kunststofffolien (z.B. Polyethylenfolien, Polypropylenfolien, Polyesterfolien), Holz, Kork, silikatischen und metallischen Substraten sowie sonstigen polymeren Substraten, wie z.B. Polycarbonat, Polyurethan, Polyamid und Polyester.
Bei dem eingesetzten Papier kann es sich um minderwertige Papiersorten, wie saugfähige Papiere, einschließlich rohem, d.h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgehalt, holzhaltige Papiere, nicht satinierte oder nicht kalandrierte Papiere, Papiere, die durch die Verwendung eines Trockenglättzylinders bei ihrer Herstellung ohne weitere aufwendige Maßnahmen auf einer Seite glatt sind, unbeschichtete Papiere oder aus Papierabfällen hergestellte Papiere handeln. Bei dem Papier kann es sich aber auch um hochwertige Papiersorten handeln, wie saugarme Papiere, geleimte Papiere, Paiere mit hohem Mahlgrad, holzfreie Papiere, kalandrierte oder satinierte Papiere, Pergaminpapiere, pergamentisierte Papiere oder vorbeschichtete Papiere.
Die mit den gehärteten Polymerabmischungen (**A**) beschichteten Papiere und Folien eignen sich beispielsweise zum Herstellen von Trenn-, Abdeck- und Mitläuferpapieren, einschließlich Mitläuferpapieren, die bei der Herstellung von z.B. Gieß- oder Dekorfolien oder von Schaumstoffen eingesetzt werden. Sie eignen sich weiterhin zur Herstellung von Trenn-, Abdeck- und Mitläuferpapieren, -folien und -tüchern für die Ausrüstung der Rückseiten von selbstklebenden Bändern oder selbstklebenden Folien oder der beschrifteten Seiten von selbstklebenden Etiketten.
Die Polymerabmischungen (**A**) eignen sich auch für die Ausrüstung von Verpackungsmaterial, wie solchem aus Papier, Pappschachteln, Metallfolien und Fässern, die beispielsweise für die Lagerung und/oder den Transport von klebrigen Gütern, wie Klebstoffen und klebrigen Lebensmitteln bestimmt sind.
Ein weiteres Beispiel für die Anwendung der mit den vernetzten Polymerabmischungen (**A**) beschichteten Oberflächen ist die Ausrüstung von Trägern zum Übertragen von Haftklebeschichten beim sogenannten "Transfer-Verfahren".

Zum Aufbringen der Polymerabmischungen (**A**) auf die genannten Oberflächen kommen dem Fachmann geläufige Verfahren, wie z.B. Rakelverfahren, Tauchverfahren, Extrusionsverfahren, Spritz- oder Sprühverfahren sowie Schleuderverfahren, zum Einsatz. Auch alle Arten von Rollenbeschichtungen, wie Gravurwalzen, Pflatschen oder ein Auftrag über Mehrwalzensysteme sowie Siebdruck sind möglich.
Die Schichtdicke auf den zu beschichtenden Oberflächen beträgt vorzugsweise 0,005 bis 1000 µm, besonders bevorzugt 0,5 bis 80 µm.

Die Polymerabmischungen (**A**) eignen sich ebenfalls als Abformmassen und zur Herstellung von Formkörpern. So können Polymerabmischungen (**A**), die ein Alkoxysilan-funktionelles Polyolefin als Verbindung (**V**) enthalten, beispielsweise zur Herstellung von Kabelummantelungen und Rohren eingesetzt werden. Ebenso können Polymerabmischungen (**A**) zur Herstellung von Siliconformkörpern Verwendung finden.

Ebenso können die Polymerabmischungen (**A**) als Kleb-, Dicht- und Fugendichtstoffe oder Verkittungsmassen sowie als Schmelzkleber, eingesetzt werden. Einsatzmöglichkeiten liegen beispielsweise im Fensterbau, bei der Herstellung von Aquarien oder Vitrinen sowie für die Isolierung von elektrischen oder elektronischen Vorrichtungen. Als Untergründe sind dabei typischerweise mineralische Untergründe, Metalle, Kunststoffe, Glas und Keramiken geeignet.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20 °C.

### Beispiel 1: Härtung einer Polymerabmischung

Eine Mischung enthaltend 1,60 g (0,533 mmol) eines α,ω-SiOH terminierten Polydimethylsiloxans (Mw = 3000 g/mol), 0,15 g (0,495 mmol) Tris(tert.-pentoxy)silanol [CAS Nr. 17906-35-3] und eine Lösung von 6 mg Cu(I)trifluormethylsulfonat-Toluol-Komplex [CAS 48209-28-5] in 0,2 mL Ethylacetat wird unter Feuchtigkeitsausschluss auf 140 °C erwärmt. Nach 1 min erhält man ein gehärtetes Polymer, das in gängigen organischen Lösungsmitteln wie THF, Ethylacetat und Toluol unlöslich ist.

### Beispiel 2: Herstellung eines tert.-Butoxysilyl-funktionellen Siloxans

Zu einer Lösung von 2,50 g (10 mmol) Natrium-tris(tert.-butoxy)silanolat in 10 mL Cyclohexan werden 1,02 g (5 mmol) 1,2-Dichlor-1,1,2,2-tetramethyldisiloxan getropft und das Gemisch für 3 h auf 80 °C erwärmt. Nach Abfiltrieren des Niederschlags wird das Lösungsmittel abdestilliert. Man erhält 2,6 g eines farblosen Öls.

### Beispiel 3: Härtung einer Polymerabmischung

Eine Mischung enthaltend 9,00 g tert.-Butoxysilyl-funktionelles Siloxan aus Beispiel 2 und 0,50 g Aluminiumisopropylat werden für 1 h auf 150 °C erwärmt. Aus der flüssigen Mischung bildet sich ein unschmelzbarer Feststoff, der in gängigen organischen Lösungsmitteln wie THF, Ethylacetat und Toluol unlöslich ist.

### Beispiel 4: Härtung einer Polymerabmischung

Eine Mischung enthaltend 0,26 g eines Bis[(3-methyldimethoxysilyl)propyl]-polypropylenoxids [CAS Nr. 75009-88-0], 0,12 g (0,40 mmol) Tris(tert.-pentoxy)silanol [CAS Nr. 17906-35-3] und eine Lösung von 11 mg
Cu(I)trifluormethylsulfonat-Toluol-Komplex [CAS 48209-28-5] in 0,2 mL Ethylacetat wird unter Feuchtigkeitsausschluss auf 130 °C erwärmt. Nach 10 min erhält man ein klebfreies durchvernetztes Polymer, das sich in gängigen organischen Lösungsmitteln wie THF, Ethylacetat und Toluol nicht mehr lösen lässt.

### Beispiel 5: Synthese von Tris(tert.-butoxy)vinylsilan

Zu einer Lösung von 191 ml (1,30 mol) Vinyltrichlorsilan in 2100 ml Hexan werden bei 0 °C innerhalb von 6 h 574 g Kalium-tert.-butylat gegeben. Das Gemisch wird für 2 h bei Raumtemperatur und für 15 h unter Rückfluß gerührt. Nach Abfiltrieren des Niederschlags wird das Lösungsmittel abgedampft und der Rückstand fraktioniert destilliert. Man erhält 63 g eines farblosen Öls (Siedepunkt 75 °C, 3 mbar).

### Beispiel 6: Herstellung und thermische Härtung eines thermisch vernetzbaren Polyethylens

Eine Mischung enthaltend 2,70 g Polyethylen (Mn = 1600 g/mol, Mw = 4000 g/mol), 0,27 g Vinyl-tris(tert.-butoxy)silan und 20 µL tert.-Butylperoxybenzoat wird für 4 h auf 120 °C erwärmt. Zur Härtung des durch Abkühlen auf Raumtemperatur erhaltenen farblosen Tris(tert.-butoxy)silan-funktionellen Polyethylens werden 0,50 g des Polymers mit 8 mg Cu(I)trifluormethylsulfonat-Toluol-Komplex [CAS 48209-28-5] bzw. 10 mg Dodecylbenzolsulfonsäure für 10 min auf 180 °C erhitzt. Dabei wandelt sich die Schmelze in einen unschmelzbaren Feststoff um.

### Beispiel 7. Herstellung eines tert.-Butoxysilyl-funktionellen Siliconöls

Zu einer Lösung von 20,0 g Di(tert.-butoxy)diacetoxysilan in 300 mL Methylisobutylketon werden 15,0 g Triethylamin und 1,2 mL Wasser gegeben. Das Gemisch wird für 4 h auf 60 °C erwärmt. Nach Zugabe von 2,00 mL Trimethylchlorsilan und 2,00 mL Triethylamin wird das Gemisch für 1 h auf 80 °C erwärmt. Das Lösungsmittel wird abdestilliert und der Rückstand in Ethylacetat aufgenommen. Nach Waschen der Lösung mit Wasser, Trocknen der organischen Phase mittels Magnesiumsulfat und Abdestillieren des Lösungsmittels erhält man 9,30 g eines farblosen Öls.

### Beispiel 8. Härtung einer Polymerabmischung

Eine Lösung von 10 mg Cu(I)trifluormethylsulfonat-Toluol-Komplex [CAS 48209-28-5] in 0,2 mL Ethylacetat wird in eine Mischung von 1,00 g des in Beispiel 7 beschriebenen Siloxans und 10,0 g eines α,ω-SiOH terminierten Polydimethylsiloxans (Mw = 6000 g/mol) gerührt. Durch Erwärmen der Mischung für 5 min auf 140 °C wird ein farbloser Feststoff erhalten, der sich in gängigen organischen Lösungsmitteln wie THF, Ethylacetat und Toluol nicht mehr lösen lässt.

### Beispiel 9. Herstellung eines tert.-Butoxysilyl-funktionellen Siliconöls

Zu einer Lösung von 190 g eines α,ω-SiOH terminierten Polydimethylsiloxans (Mw = 6000 g/mol) in 1500 mL Methylisobutylketon werden 43,0 g Triethylamin und anschließend 50,0 g Di(tert.-butoxy)diacetoxysilan gegeben und das Gemisch auf 60 °C erwärmt. Nach 1 h werden 15,0 mL Wasser und nach einer weiteren Stunde eine Mischung aus 15,0 mL Trimethylchlorsilan und 15 mL Triethylamin zugegeben. Nach einer weiteren Stunde wird das Gemisch auf Raumtemperatur gekühlt und der gebildete Niederschlag abfiltriert. Nach Abdestillieren des Lösungsmittels wird der ölige Rückstand in Ethylacetat aufgenommen und mit Wasser gewaschen. Nach Trocknen der organischen Phase mittels Magnesiumsulfat und Abdestillieren des Lösungsmittels erhält man 215 g eines farblosen Öls.

### Beispiel 10. Härtung einer Polymerabmischung

Die Härtung des in Beispiel 9 beschriebenen tert.-Butoxyfunktionellen Siliconöls kann thermisch oder durch UV-Strahlung erfolgen:
Eine Lösung von 0,03 g Triphenylsulfoniumtrifluormethansulfonat in 0,5 mL Aceton wird mit 5,00 g des in Beispiel 9 beschriebenen Siloxans gemischt. Das Gemisch wird mittels eines Rakels in einer Schichtdicke von ca. 100 µm auf eine Glasplatte aufgebracht. Nach Abdampfen des Acetons wird die Beschichtung durch UV-Bestrahlung (40 s, UVA-Cube^{®} der Dr. Höhnle AG, Strahlungsdichte: 150 mW/cm²) gehärtet. Man erhält eine klebfreie Beschichtung, die sich in gängigen organischen Lösungsmitteln wie THF, Ethylacetat und Toluol nicht mehr lösen lässt.
Eine Lösung von 0,10 g Dodecylbenzolsulfonsäure in 0,5 mL Ethylacetat wird mit 5,00 g des in Beispiel 9 beschriebenen Siloxans gemischt. Das Gemisch wird mittels eines Rakels in einer Schichtdicke von ca. 100 µm auf eine Glasplatte aufgebracht. Erhitzen des Films auf 140 °C für 5 min führt zur Bildung einer klebfreien Beschichtung, die sich in gängigen organischen Lösungsmitteln wie THF, Ethylacetat und Toluol nicht mehr lösen lässt.

### Beispiel 11. Herstellung eines tert.-Butoxysilyl-funktionellen Siliconharzes

Zu einer Lösung von 300 g eines Siliconharzes (Harz der Zusammensetzung (Me₂SiO_{2/2})_{0,1}(MeSiO_{3/2})_{0,4}(PhSiO_{3/2}) 0,₅(O_{1/2}L)₀,₄ mit L unabhängig voneinander Wasserstoff bzw. Ethylrest; Mw = 3000 g/mol; OH-Gruppengehalt von 5,0 Gew.-%) in 1000 mL Methylisobutylketon werden 26,0 g Triethylamin und anschließend 30,0 g Di(tert.-butoxy)diacetoxysilan gegeben und das Gemisch auf 60 °C erwärmt. Nach 1 h werden 9,00 mL Wasser und nach einer weiteren Stunde eine Mischung aus 15,0 mL Trimethylchlorsilan und 15 mL Triethylamin zugegeben. Nach einer weiteren Stunde wird das Gemisch auf Raumtemperatur gekühlt und der gebildete Niederschlag abfiltriert. Nach Abdestillieren des Lösungsmittels wird der Rückstand in Ethylacetat aufgenommen und mit Wasser gewaschen. Durch Trocknen der organischen Phase mittels Magnesiumsulfat und Abdestillieren des Lösungsmittels erhält man 305 g eines farblosen Feststoffs.

### Beispiel 12. Härtung einer Polymerabmischung

Zu einer Lösung von 10 g des in Beispiel 11 beschriebenen Siliconharzes in 10 mL Ethylacetat werden 0,5 g Cu(I)trifluormethylsulfonat-Toluol-Komplex [CAS 48209-28-5] gegeben. Das Gemisch wird mittels eines Rakels in einer Schichtdicke von ca. 100 µm auf eine Glasplatte aufgebracht. Erhitzen des Gemischs auf 140 °C für 5 min führt zur Bildung einer klebfreien Beschichtung, die sich in gängigen organischen Lösungsmitteln wie THF, Ethylacetat und Toluol nicht mehr lösen lässt.

## Patentansprüche

1. Verfahren zur Herstellung von Beschichtungen, silanvernetzten Formkörpern und zu Kleb- und Dichtstoffen aus vernetzbaren Polymerabmischungen (A), enthaltend mindestens eine Verbindung (V), welche mindestens eine Alkoxysilylgruppe der allgemeinen Formel [1],
≡Si-O-C(R¹)(R²)(R³) [1],
trägt,
wobei die Verbindungen (V) Polymere (P), nämlich lineare oder verzweigte Organopolysiloxane der allgemeinen Formel [11],
(R⁷₃SiO_{1/2})ₐ(R⁷₂SiO_{2/2})_{b}(R⁷SiO_{3/2})_{c}(SiO_{4/2})_{d} [11],
sind, oder niedermolekulare Verbindungen (N) sind, die mindestens eine Gruppe der allgemeinen Formel [1] tragen, sowie einen Katalysator (K), der ausgewählt wird aus einer Brönstedt-Säure, Brönstedt-Base, Lewis-Säure und LewisBase, und der ausgewählt wird aus Zinn, Zinnoxid sowie Zinnverbindungen, Titan, Titan(IV)isopropanolat, Kupfer, Kupferoxid sowie Kupferverbindungen, Eisen, Eisen(III)chlorid, Eisen(III)acetylacetonat, Mangan, Manganoxid sowie Manganverbindungen, Aluminium, Aluminium(III)chlorid, Aluminium(III)isopropanolat, Trimethylaluminium, Bor, Boroxid sowie Borverbindungen, Zirkonium, Zr(IV)acetylacetonat, Gallium, Galliumoxid sowie Galliumverbindungen, Cer, Ceroxid sowie Cerverbindungen, Zink, Zinklaurinat, Zinkpivalat, Carbonsäuren, Mineralsäuren und Verbindungen, die bei Bestrahlung mit energiereicher Strahlung, unter Zersetzung Protonen freisetzen,
wobei
**R¹**, **R², R³** Wasserstoff, ein Halogen, einen über ein Kohlenstoffatom gebundenen Rest, wobei die Reste **R¹**, **R², R³** miteinander verbunden sein können, oder einen zweiwertigen über ein Kohlenstoffatom gebundenen Rest, der zwei Alkoxysilylgruppen der allgemeinen Formel [1] verbindet, mit der Maßgabe, dass höchstens 2 der Reste **R¹, R²**, **R³** Wasserstoff bedeuten und Alkoxysilylreste der Formel ≡Si-O-CH₂-R⁴ ausgenommen sind und
**R⁴** einen unverzweigten aliphatischen Kohlenwasserstoffrest mit 1-12 Kohlenstoffatomen bedeuten,
**R⁵** Wasserstoff, ein Halogen, einen unsubstituierten oder substituierten aliphatischen oder aromatischen Kohlenwasserstoffrest mit 1-12 Kohlenstoffatomen, eine OH-Gruppe, eine -OR⁶-Gruppe, -OC(O)R⁶-Gruppe oder einen Metalloxyrest M-O-,
**R⁶** Wasserstoff, einen unsubstituierten oder substituierten aliphatischen oder aromatischen Kohlenwasserstoffrest mit 1-12 Kohlenstoffatomen und
**M** ein Metallatom, dessen gegebenenfalls vorliegende freie Valenzen durch Liganden abgesättigt sind,
**R⁷** die Bedeutung des Restes **R⁵** und mindestens ein Rest **R⁷** die Bedeutung -O-C(R¹)(R²)(R³) annimmt,
**a**, **b**, **c** und **d** einen ganzzahligen Wert von größer oder gleich 0 bedeuten, mit der Maßgabe, dass die Summe aus **a** + **b** + **c** mindestens 1 ist und
wobei Polymerabmischungen (**A**) ausgeschlossen sind, die bei der Vernetzung SiO₂ bilden,
mit der Massgabe, dass, wenn die Verbindungen (**V**) niedermolekulare Verbindungen (**N**) sind, die Polymerabmischungen (**A**) organische Polymere enthalten, welche durch Reaktion mit Wasser SiOH-Gruppen ausbilden oder eine Kondensationsreaktion mit SiOH-tragenden Molekülen eingehen können,
bei dem die vernetzbaren Polymerabmischungen (**A**) zur Härtung für 1 s bis 48 h auf 5 °C bis 300 °C erwärmt werden.

2. Verfahren nach Anspruch 1, bei denen die Alkoxysilylgruppe der allgemeinen Formel [1] die allgemeine Formel [2] annimmt,
=Si(R⁵)-O-C(R¹)(R²)(R³) [2],
wobei
**R⁵** Wasserstoff, ein Halogen, einen unsubstituierten oder substituierten aliphatischen oder aromatischen Kohlenwasserstoffrest mit 1-12 Kohlenstoffatomen, eine OH-Gruppe, eine -OR⁶-Gruppe, -OC(O)R⁶-Gruppe oder einen Metalloxyrest M-O-,
**R⁶** einen unsubstituierten oder substituierten aliphatischen oder aromatischen Kohlenwasserstoffrest mit 1-12 Kohlenstoffatomen und
**M** ein Metallatom, dessen gegebenenfalls vorliegende freie Valenzen durch Liganden abgesättigt sind, bedeuten.

3. Verfahren nach Anspruch 1 oder 2, bei denen die Reste **R¹**, **R²**, **R³** Wasserstoff, Chlor, einen unsubstituierten oder substituierten aliphatischen oder aromatischen Kohlenwasserstoffrest oder einen über ein Kohlenstoffatom gebundenen Siloxanrest, eine Carbonylgruppe -C(O)R⁶, eine Carbonsäureestergruppe -C(O)OR⁶, eine Cyanogruppe -C=N oder eine Amidgruppe -C(O)NR⁶₂, bedeuten und der Rest **R⁶** Wasserstoff, Methyl, Ethyl, Propyl, Vinyl oder Phenyl bedeutet.

4. Vernetzungsprodukte, hergestellt nach dem Verfahren nach Anspruch 1 bis 3.

## Claims

1. Method for producing coatings, silane-crosslinked moldings, and adhesives and sealants from crosslinkable polymer blends (**A**) comprising at least one compound (**V**) which carries at least one alkoxysilyl group of the general formula [1],
≡Si-O-C(R¹)(R²)(R³) [1]
the compounds (**V**) being polymers (**P**), namely linear or branched organopolysiloxanes of the general formula [11],
(R⁷₃SiO_{1/2})ₐ(R⁷₂SiO_{2/2})_{b}(R⁷SiO_{3/2})_{c}(SiO_{4/2})_{d} [11]
or being low molecular mass compounds (**N**) which carry at least one group of the general formula [1], and also a catalyst (**K**) selected from a Brönsted acid, Brönsted base, Lewis acid and Lewis base, and which is selected from tin, tin oxide, and tin compounds, titanium, titanium(IV) isopropoxide, copper, copper oxide, and copper compounds, iron, iron(III) chloride, iron(III) acetylacetonate, manganese, manganese oxide, and manganese compounds, aluminum, aluminum(III) chloride, aluminum(III) isopropoxide, trimethylaluminum, boron, boron oxide, and boron compounds,
zirconium, Zr(IV) acetylacetonate, gallium, gallium oxide, and gallium compounds, cerium, cerium oxide, and cerium compounds, zinc, zinc laurate, zinc pivalate, carboxylic acids, mineral acids, and compounds which on irradiation with high-energy radiation give up protons, with decomposition,
where
**R¹, R²,** and **R³** are hydrogen, a halogen, a radical attached via a carbon atom, where the radicals **R¹, R²,** and **R³** may be joined to one another, or a divalent radical which is attached via a carbon atom and joins two alkoxysilyl groups of the general formula [1], with the proviso that not more than two of the radicals **R¹, R²,** and **R³** are hydrogen, and alkoxysilyl radicals of the formula ≡Si-O-CH₂-R⁴ are excepted, and
**R⁴** is an unbranched aliphatic hydrocarbon radical having 1-12 carbon atoms,
**R⁵** is hydrogen, a halogen, an unsubstituted or substituted aliphatic or aromatic hydrocarbon radical having 1-12 carbon atoms, an OH group, an -OR⁶ group, -OC(O)R⁶ group or a metal-oxy radical M-O-,
**R⁶** is hydrogen, an unsubstituted or substituted aliphatic or aromatic hydrocarbon radical having 1-12 carbon atoms, and
**M** is a metal atom, any free valences of which are satisfied by ligands,
**R⁷** adopts the definition of the radical **R⁵,** and at least one radical **R**⁷ adopts the definition -O-C(R¹)(R²)(R³),
**a**, **b**, **c**, and **d** denote an integral value of greater than or equal to 0, with the proviso that the sum of **a** + **b** + **c** is at least 1, and
with the exclusion of polymer blends (**A**) which form SiO₂ on crosslinking,
with the proviso that, if the compounds (**V**) are low molecular mass compounds (**N**), the polymer blends (**A**) comprise organic polymers which are able by reaction with water to form SiOH groups or to enter into a condensation reaction with SiOH-carrying molecules, in which the crosslinkable polymer blends (**A**) for curing are heated at 5°C to 300°C for 1 s to 48 h.

2. Method according to Claim 1, wherein the alkoxysilyl group of the general formula [1] adopts the general formula [2],
=Si(R⁵)-O-C(R¹)(R²)(R³) [2]
where
**R⁵** is hydrogen, a halogen, an unsubstituted or substituted aliphatic or aromatic hydrocarbon radical having 1-12 carbon atoms, an OH group, an -OR⁶ group, -OC(O)R⁶ group or a metal-oxy radical M-O-,
**R⁶** is an unsubstituted or substituted aliphatic or aromatic hydrocarbon radical having 1-12 carbon atoms, and
**M** is a metal atom, any free valences of which are satisfied by ligands.

3. Method according to Claim 1 or 2, wherein the radicals **R¹**, **R²**, and **R³** are hydrogen, chlorine, an unsubstituted or substituted aliphatic or aromatic hydrocarbon radical or a siloxane radical attached via a carbon atom, or are a carbonyl group -C(O)R⁶, a carboxylic ester group -C(O)OR⁶, a cyano group -C≡N or an amide group -C(O)NR⁶₂, and the radical **R⁶** is hydrogen, methyl, ethyl, propyl, vinyl or phenyl.

4. Crosslinking products produced by the method according to Claims 1 to 3.

## Revendications

1. Procédé pour la réalisation de revêtements, de corps façonnés réticulés par silane et d'adhésifs et de masses d'étanchéité à partir de mélanges (A) réticulables de polymères, contenant au moins un composé (V), qui porte au moins un groupe alcoxysilyle de formule générale [1],
≡Si-O-C(R¹)(R²)(R³) [1],
où les composés (V) sont des polymères (P), à savoir des organopolysiloxanes linéaires ou ramifiés de formule générale [11],
(R⁷₃SiO_{1/2})ₐ(R⁷₂SiO_{2/2})_{b}(R⁷SiO_{3/2})_{c}(SiO_{4/2})_{d} [11],
ou des composés de bas poids moléculaire (N), qui portent au moins un groupe de formule générale [1], ainsi qu'un catalyseur (K), qui est choisi parmi un acide de Brônstedt, une base de Brönstedt, un acide de Lewis et une base de Lewis, et qui est choisi parmi l'étain, l'oxyde d'étain ainsi que les composés d'étain, le titane, l'isopropanolate de titane (IV), le cuivre, l'oxyde de cuivre ainsi que les composés du cuivre, le fer, le chlorure de fer (III), l'acétylacétonate de fer (III), le manganèse, l'oxyde de manganèse ainsi que les composés du manganèse, l'aluminium, le chlorure d'aluminium (III),
l'isopropanolate d'aluminium (III), le triméthylaluminium, le bore, l'oxyde de bore ainsi que les composés du bore, le zirconium, l'acétylacétonate de Zr (IV), le gallium, l'oxyde de gallium ainsi que les composés de gallium, le cérium, l'oxyde de cérium ainsi que les composés de cérium, le zinc, le laurinate de zinc, le pivalate de zinc, les acides carboxyliques, les acides minéraux et les composés qui libèrent des protons en se décomposant lors d'une irradiation par un rayonnement riche en énergie, où
R¹, R², R³ signifient hydrogène, un halogène, un radical lié via un atome de carbone, les radicaux R¹, R², R³ pouvant être liés les uns aux autres, ou un radical divalent lié via un atome de carbone, qui relie deux groupes alcoxysilyle de formule générale [1], à condition qu'au plus 2 des radicaux R¹, R², R³ signifient hydrogène et que les radicaux alcoxysilyle de formule ≡Si-O-CH₂-R⁴ soient exclus et
R⁴ signifie un radical hydrocarboné aliphatique non ramifié comprenant 1 à 12 atomes de carbone,
R⁵ signifie hydrogène, un halogène, un radical hydrocarboné aliphatique ou aromatique non substitué ou substitué, comprenant 1 à 12 atomes de carbone, un groupe OH, un groupe -OR⁶, un groupe -OC(O)R⁶ ou un radical métal-oxy M-O-,
R⁶ signifie hydrogène, un radical hydrocarboné aliphatique ou aromatique non substitué ou substitué, comprenant 1 à 12 atomes de carbone, et
M signifie un atome métallique, dont les valences libres le cas échéant présentes sont saturées par des ligands,
R⁷ présente la signification du radical R⁵ et au moins un radical R⁷ signifie -O-C(R¹)(R²)(R³),
a, b, c et d signifient un nombre entier supérieur ou égal à 0, à condition que la somme de a + b + c vaille au moins 1 et où sont exclus les mélanges (A) de polymères qui forment SiO₂ lors de la réticulation, à condition que, lorsque les composés (V) sont des composés de bas poids moléculaire (N), les mélanges (A) de polymères contiennent des polymères organiques qui peuvent former des groupes SiOH par réaction avec l'eau ou qui peuvent participer à une réaction de condensation avec des molécules portant SiOH, dans lequel les mélanges (A) réticulables de polymères sont chauffés pendant 1 s à 48 h à 5°C jusqu'à 300°C en vue de leur durcissement.

2. Procédé selon la revendication 1, dans lequel le groupe alcoxysilyle de formule générale [1] présente la formule générale [2]
=Si(R⁵)-O-C(R¹)(R²)(R³) [2],
où
R⁵ signifie hydrogène, un halogène, un radical hydrocarboné aliphatique ou aromatique non substitué ou substitué, comprenant 1 à 12 atomes de carbone, un groupe OH, un groupe -OR⁶, un groupe -OC(O)R⁶ ou un radical métal-oxy M-O-,
R⁶ signifie un radical hydrocarboné aliphatique ou aromatique non substitué ou substitué, comprenant 1 à 12 atomes de carbone, et
M signifie un atome métallique, dont les valences libres le cas échéant présentes sont saturées par des ligands.

3. Procédé selon la revendication 1 ou 2, dans lequel les radicaux R¹, R², R³ signifient hydrogène, chlore, un radical hydrocarboné aliphatique ou aromatique, non substitué ou substitué, ou un radical siloxane lié via un atome de carbone, un groupe carbonyle -C(O)R⁶, un groupe ester d'acide carboxylique -C(O)OR⁶, un groupe cyano -C≡N ou un groupe amide -C(O)NR⁶₂, et le radical R⁶ signifie hydrogène, méthyle, éthyle, propyle, vinyle ou phényle.

4. Produits de réticulation, préparés selon le procédé selon les revendications 1 à 3.
